# EUROPÄISCHE PATENTSCHRIFT

(11) **EP 0 788 710 B1**
(45) Veröffentlichungstag und Bekanntmachung des Hinweises auf die Patenterteilung: **10.02.1999**
(21) Anmeldenummer: 95935447.3
(22) Anmeldetag: 13.10.1995
(51) Int. Cl.: H04N 5/445, H04N 7/08

(54) **VORRICHTUNG ZUR REALISIERUNG VON INTERAKTIVEN FERNSEHDIENSTEN**
DEVICE FOR IMPLEMENTING INTERACTIVE TELEVISION SERVICES
Dispositif permettant la réalisation de services interactifs de télévision

(30) Priorität: 24.10.1994 DE 4437928
(43) Veröffentlichungstag der Anmeldung: 13.08.1997
(73) Patentinhaber: GRUNDIG Aktiengesellschaft, 90762 Fürth (DE)
(72) Erfinder: KORNHAAS, Wolfgang, D-90768 Fürth (DE)
(86) Internationale Anmeldenummer: EP9504035
(87) Internationale Veröffentlichungsnummer: WO9613119

(56) Entgegenhaltungen:
- EP-A- 0 569 311
- EP-A- 0 583 196
- WO-A-94/14282
- DE-A- 4 113 542
- FR-A- 2 417 226
- US-A- 4 071 697
- US-A- 5 138 649
- US-A- 5 410 326
- THE IEEE WESCANEX '91, 29 MAY 1991, REGINA SASKATCHEWAN, CANADA, Seiten 309-311, XP 000313096 KING 'DEVICE FOR THE INTEGRATION OF TELEVISION AND TELEPHONE CONTROL VIA HANDHELD INFRARED REMOTE'
- MOTOROLA TECHNICAL DEVELOPMENTS, Bd. 15, Nr. 5, 30.Mai 1992 SCHAUMBURG, ILLINOIS US, Seite 45 XP 000306139 TRAN L. ET AL 'UNIVERSAL PROGRAMMABLE REMOTE CONTROL/TELEPHONE'
- IEEE TRANSACTIONS ON CONSUMER ELECTRONICS, Bd. 36, Nr. 4, 30.November 1990 NEW YORK US, Seiten 877-884, XP 000178993 GARR M. ET AL 'DATA BROADCASTING IN THE USA LOW COST DELIVERY ALTERNATIVE AND MORE'
- 18TH INTERNATIONAL TELEVISION SYMPOSIUM AND TECHNICAL EXHIBITION, SYMPOSIUM RECORD CABLE SESSIONS, CABLE C1, 10. - 15.Juni 1993 MONTREUX, SWITZERLAND, Seiten 571-586, XP 000379382 BRUGLIERA V. 'Digital On-Screen Display , A New Technology for the Consumer Interface'

## Beschreibung

Die Erfindung betrifft eine Vorrichtung zur Realisierung von interaktiven Fernsehdiensten.

Dabei werden von einem Fernsehsender Fernsehsendungen ausgestrahlt, in denen Produkte präsentiert werden, die beispielsweise von einem Versandhaus vertrieben werden. Empfangsseitig werden die Bilder der Produkte auf dem Bildschirm eines Fernsehempfängers dargestellt. In diese Bilder sind im folgenden auch als Produktidentifikationsinformation bezeichnete Produktcodesignale eingeblendet, die beispielsweise die genaue Produktbezeichnung, die Bestellnummer und die Telefonnummer, über die das Produkt bestellt werden kann, enthalten.

Ein Kunde, der ein Produkt bestellen möchte, muß sich die Produktbezeichnung, die Bestellnummer und die Telefonnummer notieren, um danach unter Benutzung eines herkömmlichen Telefons die Bestellung aufgeben zu könnnen. Nach dem Zustandekommen einer Verbindung muß dem Operator des Versandhauses der Name des Kunden, seine Adresse und die Bestellnummer durchgegeben werden.

Die Nachteile eines derartigen Vorgehens bestehen darin, daß leicht Übermittlungsfehler auftreten können und daß weder das Versandhaus noch der Kunde wirkungsvolle Mittel gegenüber sogenannten Scherzbestellungen haben. Weiterhin ist das bekannte Vorgehen umständlich und zeitaufwendig.

Aus US-A-4,071,697 ist ein interaktives Video/Telefonübertragungssystem bekannt. Das interaktive Übertragungssystem besteht aus einer Sendestation, die an eine Vielzahl von Fernsehempfängern über einen Fernsehkanal ein bestimmtes Verkaufsprogramm ausstrahlt. Der ein derartiges Fernsehprogramm betrachtende Benutzer steuert die auf dem Bildschirm dargestellten Werbeseiten mittels einer Tastatur, mit deren Hilfe er auch einen gewünschten Verkaufsgegenstand auswählen und über eine daran ankoppelbare Telefonverbindung bestellen kann.

Aus EP-A-0 569 311 ist eine Kommunikationssystem bekannt, bei dem innerhalb des übertragenen Fernsehsignals eine Text- oder numerische Information angezeigt wird. Das System ist in der Lage, eine über Infrarot-Fernbedienung ausgewählte derartige Text- oder numerische Information über ein Datenübertragungssystem weiterzuverarbeiten, um beispielsweise Kaufaufträge zu übermitteln.

Aus DE-A-41 13 543 ist ein beispielsweise als schnurloses Telefon ausgebildetes Fernsprechgerät beschrieben, das gleichzeitig auch als Fernbedienung für ein Fernsehgerät beispielsweise zum Zwecke des interaktiven Fernsehens eingesetzt werden kann, wobei über den Zeitpunkt einer Auswahlentscheidung aus Fernsprechgerät eine mit dem dargestellten Fernsehbild gekoppelte Information ausgewählt wird.

Aus US-A-5,410,326 ist eine programmierbare Fernbedienung bekannt, die für die Fernbedienung einer Vielzahl von ferngesteuerbaren Einrichtungen vorgesehen ist. Die beschriebene Fernbedienung ist darüberhinaus in der Lage, Daten, die im Fernsehsignal entweder im Audio- oder im Videosignal enthalten sind, von einem Fernsehempfänger zu überunehmen, weiter zu verarbeiten oder auf der Fernbedienung darzustellen, und ausgewählte Daten über eine Telefonschnittstelle zu übermitteln.

EP-A-0 583 196 beschreibt ein Gerät zur Darstellung von Fernseh-Zusatzinformation auf einem Fernsehbildschirm. Das Gerät ist an das Telefonnetz anschließbar, um mittels Fernbedieneinheit ausgewählte dargestellte Zusatzinformation an ein externes System zu übermitteln.

FR-A-2 417 226 offenbart die Infrarot-übermittlung vom Fernsehempfänger dargestellter und mittels Fernbedienungsgeber ausgewählter Information zum Fernbediennungsgeber. Die ausgewählte Information kann vom Fernsehempfänger über das Telefonnetz weitergeleitet werden.

Der Erfindung liegt die Aufgabe zugrunde, eine Vorrichtung zur Realisierung von interaktiven Fernsehdiensten anzugeben, die bei geringer Komplexität die Durchführung eines Bestellvorgangs auf einfache Weise ermöglicht.

Diese Aufgabe wird durch die im Anspruch 1 angegebenen Merkmale gelöst.

Ein Vorteil der Erfindung besteht insbesondere darin, daß sich der Kunde die am Bildschirm des Fernsehempfängers angezeigten Produktcodesignale nicht mehr notieren muß, um eine telefonische Bestellung aufgeben zu können.

Der Anspruch 2 betrifft eine vorteilhafte Ausgestaltung der Übertragungsstrecke vom Fernsehempfänger zum Fernbedienungsgeber . Anspruch 3 beschreibt eine einfache Möglichkeit der Anwahl der auf dem Bildschirm dargestellten Produktcodesignale. Mittels der im Anspruch 4 angegebenen Merkmale wird der Vorteil erreicht, daß der Kunde die Produktcodesignale vor der Absendung der Bestellung an die zentrale Rechnereinheit nochmals auf dem Display des Fernbedienungsgebers kontrollieren kann.

Der Vorteil der im Anspruch 5 angegebenen Vorrichtung besteht darin, daß der Kunde von der Notwendigkeit der Eingabe seines Namens und seiner Adresse befreit wird und daß die Wahrscheinlichkeit von Scherzbestellungen verringert wird. Mittels der in den Ansprüchen 6 bis 8 aufgezeigten Lösungen wird eine weitere Vereinfachung des Bestellvorganges erreicht.

Die Ansprüche 9 und 10 zeigen auf, wie auf einfache Weise die Benutzerfreundlichkeit des Bestellvorganges erhöht und gleichzeitig die Wahrscheinlichkeit von Scherzbestellungen verringert werden kann.

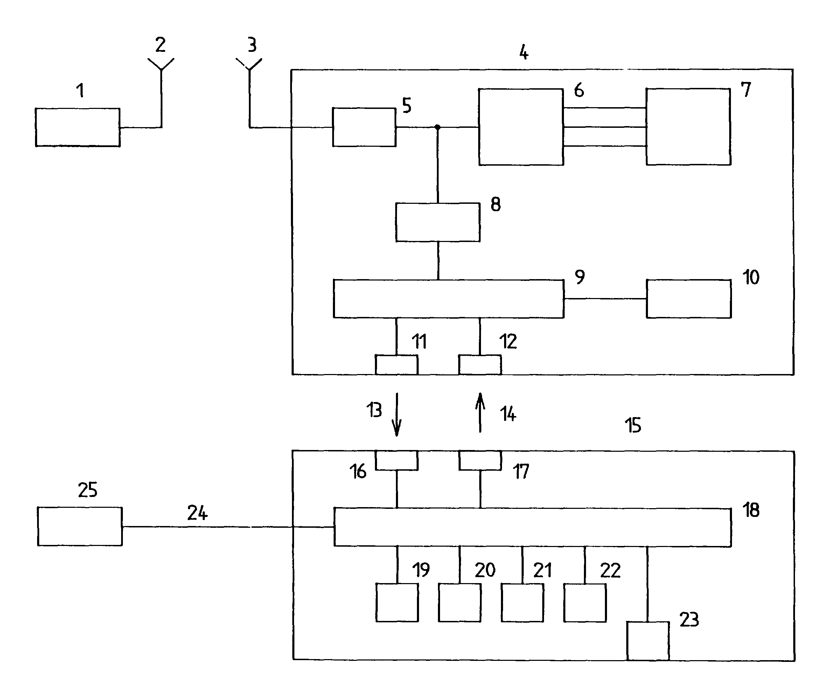

Weitere Vorteile der Erfindung ergeben sich aus der Erläuterung eines Ausführungsbeispiels anhand der Figur.

Diese zeigt eine Vorrichtung zur Realisierung eines interaktiven Fernsehdienstes, der unter dem Namen Home-Shopping bekannt geworden ist.

Die gezeigte Vorrichtung weist einen an eine Sendeantenne 2 angeschlossenen Fernsehsender 1, einen an eine Empfangsantenne 3 angeschlossenen Fernsehempfänger 4, einen mit einem Telefon zu einer baulichen Einheit zusammengefaßten Fernbedienungsgeber 15, Infrarotübertragungsstrecken 13 und 14, eine Telefonleitung 24 und eine zentrale Rechnereinheit 25 auf. Die zentrale Rechnereinheit kann beispielsweise in einem Versandhaus angeordnet sein oder auch im Fernsehsender.

Der Femsehempfänger 4 enthält eine Eingangsschaltung 5 mit einem Tuner und einem Zwischenfrequenzteil, einen Farbdecoder 6, welcher an seinem Ausgang R,G.B-Signale zur Verfügung stellt, einen Bildschirm 7, einen Datendecoder 8, einen Mikrocomputer 9, einen Speicher 10, einen Infrarotsender 11 und einen Infrarotempfänger 12 auf.

Der Fernbedienungsgeber 15 weist einen Infrarotempfänger 16, einen Infrarotsender 17, einen Wählautomaten einen Codeumwandler enthaltenden Mikrocomputer 18, einen Telefonhörer 19, ein Display 20, eine Bedientastatur 21, einen Speicher 22 und/oder eine Speicherkarte 23 auf.

Die gezeigte Vorrichtung arbeitet wie folgt:

Im Fernsehsender 1 wird auf bekannte Art und Weise ein hochfrequentes. beispielsweise PAL-codiertes Fernsehsignal erzeugt und über die Sendeantenne 2 ausgestrahlt. Die im Fernsehsignal enthaltenen Bildinformationen entsprechen Bildern von Produkten, die von einem Versandhaus vertrieben werden. Das Fernsehsignal enthält sowohl im aktiven Bildbereich als auch in einer Datenzeile der vertikalen Austastlücke Produktcodesignale, die der genauen Bezeichnung des Produkts, der Bestellnummer des Produkt und der Telefonnummer, über die das Produkt bestellt werden kann, entsprechen.

Dieses hochfrequente Fernsehsignal wird über die Empfangsantenne 3 der Eingangsschaltung 5 des Fernsehempfängers 4 zugeführt. Das am Ausgang der Eingangsschaltung zur Verfügung stehende FBAS-Signal wird an den Farbdecoder 6 und den Datendecoder 8 weitergeleitet. Der Farbdecoder 6 dient zur Umwandlung des FBAS-Signals in R,G,B-Signale. welche auf dem Bildschirm 7 derart dargestellt werden, daß auf einem Großteil des Bildschirms Bilder eines oder mehrerer Produkte und auf einem kleinen Teil des Bildschirms die jeweils zugehörigen Produktbezeichnungen und Bestellnummern angezeigt werden.

Mittels des Datendecoders 8 erfolgt eine Abtrennung der Produktcodesignale aus der Datenzeile der vertikalen Austastlücke des FBAS-Signals. Die Produktcodesignale werden dem Mikrocomputer 9 zugeführt.

Möchte der Kunde eines der Produkte bestellen, die am Bildschirm dargestellt werden, dann wählt er bei der gleichzeitigen Darstellung mehrerer Produkte auf dem Bildschirm unter Verwendung der auf der Bedientastatur 21 des Fernbedienungsgebers 15 angeordneten Cursorsteuertasten den auf dem Bildschirm dargestellten Produktnamen und die Bestellnummer an und betätigt eine ebenfalls auf der Bedientastatur 21 des Fernbedienungsgebers 15 angeordnete Übernahmetaste oder er betätigt - wenn nur ein Produkt angeboten wird - direkt die Übernahmetaste. Diese mittels des Fernbedienungsgebers gegebenen Befehle werden dem Mikrocomputer 9 des Fernsehempfängers über den IR-Sender 17, die IR-Übertragungsstrecke 14 und den IR-Empfänger 12 zugeführt.

Nach der genannten Betätigung der Übernahmetaste initiiert der Mikrocomputer 9 die Übertragung der dem ausgewählten Produkt zugeordneten Produktcodesignale über den IR-Sender 11, die IR-Übertragungsstrecke 13 und den IR-Empfänger 16 an den Mikrocomputer 18 des Fernbedienungsgebers 15.

Dieser liest aus dem Speicher 22, bei welchem es sich um einen fest mit dem Fernbedienungsgeber 15 verbundenen Halbleiterspeicher handelt, die dort abgespeicherten Namens- und Adressendaten, die den Namen und die Adresse des Kunden angeben, aus und führt sie zusammen mit den Produktcodesignalen einem Zwischenspeicher zu.

Weiterhin werden diese Daten auf dem Display 20 angezeigt, so daß der Kunde diese Daten vor dem Absenden noch einmal überprüfen kann.

Vor der Betätigung der Sendetaste ist noch die Eingabe einer persönlichen Identifikationsnummer notwendig, die zwischen dem Versandhaus und dem Kunden vereinbart wurde. Dies dient der Sicherung gegen unbefugtes Benutzen.

Nach Betätigung der Sendetaste auf der Bedientastatur 21 des Fernbedienungsgebers 15 führt der im Mikrocomputer 18 vorgesehene Wählautomat unter Verwendung der dem Mikrocomputer 18 über die IR-Übertragungsstrecke 13 zugeführten Telefonnummer einen automatischen Wählvorgang durch, um über die Telefonleitung 24 eine Telefonverbindung mit der zentralen Rechnereinheit 25 herzustellen. Dies geschieht entweder nach dem Impulswahlverfahren oder dem sogenannten dual tone multifrequency-Verfahren (DTMF). Ist die Telefonnummer der zentralen Rechnereinheit besetzt, dann erfolgt nach Ablauf einer vorgegebenen Zeitdauer eine automatische Wahlwiederholung.

Ist die Telefonverbindung zustande gekommen, dann werden die Namensdaten, die Adressendaten und die Produktcodesignale zur zentralen Rechnereinheit 25 übertragen, mittels welcher der Bestellvorgang automatisch registriert wird.

Die Übertragung dieser Daten zur zentralen Rechnereinheit 25 erfolgt vorzugsweise nach einer Umwandlung der Daten in DTMF-Signale. Alternativ dazu ist es aber auch möglich, diese Daten der zentralen Rechnereinheit 25 über ein Datenmodem zuzuleiten oder über einen Sprachsynthesizer.

Eine vorteilhafte Weiterbildung der Erfindung besteht darin, den Fernbedienungsgeber mit einem Schlitz zur Einführung einer Speicherkarte 23 auszustatten. Auf dieser Speicherkarte, bei welcher es sich beispielsweise um eine Magnetkarte oder eine Chipkarte handeln kann, können neben dem Namen und der Adresse des Kunden auch weitere Daten abgespeichert sein, wie die Telefonnummer, über die die zentrale Rechnereinheit erreichbar ist, die Kundennummer des Kunden, die Kreditkartennummer des Kunden und ein zwischen dem Versandhaus und dem Kunden vereinbarter Geheimcode. Der Mikrocomputer 18 hat auf diese Daten Zugriff und kann sie zum automatischen Wählvorgang, zur Zusammenstellung der Bestelldaten und zur Durchführung einer Berechtigungsüberprüfung verwenden.

Dieser Betrieb mit Speicherkarte ist ein zusätzlicher oder alternativer Schutz gegen Mißbrauch.

Derartige Speicherkarten können beispielsweise die Versandhäuser ihren Kunden gebührenfrei oder gegen ein geringes Entgelt zur Verfügung stellen.

## Patentansprüche

1. Vorrichtung zur Realisierung von interaktiven Fernsehdiensten, mit
- einem Fernsehsender (1) zur Ausstrahlung von Fernsehsignalen, die Produktidentifikationsinformationen enthalten,
- einem Fernsehempfänger (4) zur Darstellung der Produktidentifikationsinformationen auf dem Bildschirm (7) des Fernsehempfängers,
- mit einem Telefon (18,19) zur Übermittlung einer Bestellung über eine Telefonleitung (24) an eine zentrale Rechnereinheit (25),
wobei
- das Telefon eine bauliche Einheit mit einem Fernbedienungsgeber (15) des Fernsehempfängers (4) bildet,
- der Fernsehempfänger (4) einen Datendecoder (8) zur Abtrennung der Produktidentifikationsinformationen aus dem Fernsehsignal aufweist,
- zwischen dem Fernsehempfänger (4) und dem Fernbdienungsgeber (15) eine Übertragungsstrecke (13) zur Übertragung der Produktidentifikationsinformationen vom Fernsehempfänger (4) zum Fernbedienungsgeber (15) vorgesehen ist,
- der Fernsehempfänger (4) einen Microcomputer (9) aufweist, der zur Initiierung der Übertragung einer mit dem Fernbedienungsgeber (15) ausgewählten Produktidentifikationsinformation zum Fernbedienungsgeber (15) vorgesehen ist,
- der Fernbedienungsgeber (15) eine Sendetaste aufweist, bei deren Betätigung ein Bestellvorgang eingeleitet wird, bei welchem die an den Fernbedienungsgeber übertragenen Produktifikationsinformationen über die Telefonleitung (24) an die zentrale Rechnereinheit (25) übermittelbar sind.

2. Vorrichtung nach Anspruch 1,
**dadurch gekennzeichnet**,
daß die Übertragungsstrecke (13) eine Infrarot-Übertragungsstrecke ist, der Fernsehempfänger (4) einen Infrarotsender (11) aufweist und der Fernbedienungsgeber (15) einen Infrarotempfänger (16) enthält.

3. Vorrichtung nach einem oder mehreren der vorhergehenden Ansprüche,
**dadurch gekennzeichnet,**
daß der Fernbedienungsgeber (15) Cursor-Steuertasten zur Auswahl einer auf dem Bildschirm (7) dargestellten Produktidentifikationsinformation aufweist.

4. Vorrichtung nach Anspruch 3,
**dadurch gekennzeichnet,**
daß der Fernbedienungsgeber (15) ein Display (20) aufweist, auf welchem die ausgewählte Produktifikationsinformation darstellbar ist.

5. Vorrichtung nach einem oder mehreren der vorhergehenden Ansprüche,
**dadurch gekennzeichnet,**
daß der Fernbedienungsgeber (15) einen Speicher (22) aufweist, in welchem Namens- und Adressdaten abspeicherbar sind.

6. Vorrichtung nach Anspruch 5,
**dadurch gekennzeichnet,**
daß bei Betätigung der Sendetaste der Speicher (22) zum Auslesen der Namens- und Adressdaten automatisch ansteuerbar ist.

7. Vorrichtung nach einem oder mehreren der vorhergehenden Ansprüche,
**dadurch gekennzeichnet,**
daß mittels des Datendecoders (8) eine im Fernsehsignal enthaltene Telefonnummer, über die ein Produkt bestellt werden kann, aus dem Fernsehsignal abtrennbar ist.

8. Vorrichtung nach Anspruch 7,
**dadurch gekennzeichnet,**
daß die Telefonnummer über die Übertragungsstrecke (13) zum Fernbedienungsgeber (15) übertragbar ist und dort einem Wählautomaten (18) zum automatischen Aufbau einer Telefonverbindung mit der zentralen Rechnereinheit (25) zuführbar ist.

9. Vorrichtung nach einem oder mehreren der vorhergehenden Ansprüche,
**dadurch gekennzeichnet,**
daß der Fembedienungsgeber (15) einen Anschluß für eine Speicherkarte (23) aufweist, auf welcher Namens- und Adressdaten und/oder Telefonnummerndaten abgespeichert sind.

10. Vorrichtung nach Anspruch 9
**dadurch gekennzeichnet,** daß sie eine Speicherharte (23) umfaßt,
die einen Speicherplatz für Zugangsberechtigungssignale aufweist.

## Claims

1. Device for implementing interactive television services, comprising
- a television transmitter (1) for broadcasting television signals which contain items of product identification information,
- a television receiver (4) for displaying the items of product identification information on the viewing screen (7) of the television receiver,
- comprising a telephone (18, 19) for transmitting an order via a telephone line (24) to a central computer unit (25),
wherein
- the telephone forms a structural unit with a remote controller (15) of the television receiver (4),
- the television receiver (4) has a data decoder (8) for separating the items of product identification information from the television signal,
- a transmission path (13) is provided between the television receiver (4) and the remote controller (15) for transmitting the items of product identification information from the television receiver (4) to the remote controller (15),
- the television receiver (4) has a microcomputer (9) which is provided for initiating the transmission to the remote controller (15) of an item of product identification information selected with the remote controller (15),
- the remote controller (15) has a transmission key with whose actuation an ordering process is initiated in which the items of product information transmitted to the remote controller can be transmitted via a telephone line (24) to the central computer (25).

2. Device according to Claim 1, characterized in that the transmission path (13) is an infrared transmission path, the television receiver (4) has an infrared transmitter (11) and the remote controller (15) contains an infrared receiver (16).

3. Device according to one or more of the preceding claims, characterized in that the remote controller (15) has cursor control keys for selecting an item of product identification information displayed on the viewing screen (7).

4. Device according to Claim 3, characterized in that the remote controller (15) has a display (20) on which the selected item of product identification information can be displayed.

5. Device according to one or more of the preceding claims, characterized in that the remote controller (15) has a memory (22) in which name and address data can be stored.

6. Device according to Claim 5, characterized in that, when the transmission key is actuated, the memory (22) can be activated to read out the name and address data automatically.

7. Device according to one or more of the preceding claims, characterized in that a telephone number which is contained in the television signal and by means of which a product can be ordered can be separated from the television signal by means of the data decoder (8).

8. Device according to Claim 7, characterized in that the telephone number can be transmitted via the transmission path (13) to the remote controller (15) and can be fed therein to an automatic dialling facility (18) for automatically setting up a telephone call to the central computer unit (25).

9. Device according to one or more of the preceding claims, characterized in that the remote controller (15) has a connection for a memory card (23) on which name and address data and/or telephone number data are stored.

10. Device according to Claim 9, characterized in that it comprises a memory card (23) which has a memory location for access authorization signals.

## Revendications

1. Dispositif pour la réalisation de services interactifs de télévision, comprenant
- un émetteur de télévision (1) destiné à émettre des signaux de télévision, qui contiennent des informations d'identification de produits,
- un récepteur de télévision (4) pour représenter les informations d'identification de produits sur l'écran (7) du récepteur de télévision,
- un téléphone (18, 19) pour transmettre une commande par l'intermédiaire d'une ligne téléphonique (24) à une unité centrale de calcul (25),
dans lequel
- le téléphone constitue une unité de construction avec un générateur de télécommande (15) du récepteur de télévision (4),
- le récepteur de télévision (4) comporte un décodeur de données (8) servant à séparer les informations d'identification de produits, du signal de télévision,
- entre le récepteur de télévision (4) et le générateur de télécommande (15) est prévue une section de transmission (13) servant à transmettre les informations d'identification de produits depuis le récepteur de télévision (4) au générateur de télécommande (15),
- le récepteur de télévision (4) comportant un micro-ordinateur (9), qui est prévu pour déclencher la transmission d'une information d'identification de produit, sélectionnée par le générateur de télécommande (15), à ce générateur de télécommande (15),
- le générateur de télécommande (15) comporte une touche d'émission, lors de l'actionnement de laquelle est déclenché un processus de commande, lors duquel les informations d'identification de produits, qui sont transmises au générateur de télécommande, peuvent être retransmises à l'unité centrale de calcul (25) par l'intermédiaire de la ligne téléphonique (24).

2. Dispositif selon la revendication 1, caractérisé en ce
que la section de transmission (13) est une section de transmission à infrarouge, que le récepteur de télévision (4) comporte un émetteur à infrarouge (11) et que le générateur de télécommande (15) contient un récepteur d'infrarouge (16).

3. Dispositif selon une ou plusieurs des revendications précédentes, caractérisé en ce
que le générateur de télécommande (15) possède des touches de commande de curseur pour sélectionner une information d'identification de produit représentée sur l'écran (7).

4. Dispositif selon la revendication 3, caractérisé en ce
que le générateur de télécommande (15) possède un dispositif d'affichage (20), sur lequel l'information sélectionnée d'identification de produits peut être représentée.

5. Dispositif selon une ou plusieurs des revendications précédentes, caractérisé en ce que
que le générateur de télécommande (15) comporte une mémoire (22), dans laquelle peuvent être mémorisées des données de noms et d'adresses.

6. Dispositif selon la revendication 5, caractérisé en ce
que lors de l'actionnement de la touche d'émission, la mémoire (22) peut être commandée de façon automatique pour la lecture des données de noms et d'adresses.

7. Dispositif selon une ou plusieurs des revendications précédentes, caractérisé en ce
qu'à l'aide du décodeur de données (8) un numéro de téléphone, qui est contenu dans le signal de télévision et au moyen duquel un produit peut être vendu, peut être séparé du signal de télévision.

8. Dispositif selon la revendication 7, caractérisé en ce
que le numéro de téléphone peut être transmis par l'intermédiaire de la section de transmission (13) au générateur de télécommande (15) et, dans ce dernier, peut être envoyé à un sélecteur automatique (18) servant à établir automatiquement une liaison téléphonique avec l'unité centrale de calcul (25).

9. Dispositif selon une ou plusieurs des revendications précédentes, caractérisé en ce
que le générateur de télécommande (15) comporte une borne pour une carte de mémoire (23), sur laquelle sont mémorisées des données de noms et adresses et/ou des données de numéros de téléphone.

10. Dispositif selon la revendication 9, caractérisé en ce
qu'elle comporte une carte de mémoire (23), qui possède un emplacement de mémoire pour des signaux d'autorisation d'accès.
